# EUROPÄISCHE PATENTANMELDUNG

(11) **EP 1 729 401 A2**
(43) Veröffentlichungstag der Anmeldung: **06.12.2006**
(21) Anmeldenummer: 06010898.2
(22) Anmeldetag: 27.05.2006
(51) Int. Cl.: H02K 7/06

(54) **Elektrolinearantrieb mit Endabschaltung**

(30) Priorität: 02.06.2005 DE 102005025748
(71) Anmelder: Grasl, Andreas, 3452 Heiligeneich (AT)
(72) Erfinder: Grasl, Andreas, 3452 Heiligeneich (AT); Karrer, Werner, 3452 Atzenbrugg (AT)
(74) Vertreter: Schubert, Siegmar

(57) **Zusammenfassung**

In einem Elektrolinearantrieb mit Endabschaltung in zwei Endstellungen eines Schubrohrs (15), das durch einen Elektromotor (4) über Getriebemittel (5) einschließlich einer Spindel (14) verschiebbar ist, sind Endschalter (8, 9), die in Abhängigkeit von der Position des Schubrohrs betätigbar. Ein Elektromotor (4) ist in einem ersten Gehäuseabschnitt (1) angeordnet. Ein zweiter Gehäuseabschnitt (2) nimmt das in ihm verschiebbare Schubrohr (15, 54) und die Spindel (14) auf, die in einer Lagerplatte (3) zwischen den Gehäusen drehbar gelagert ist. Um eine einfache Abdichtung der elektrischen Teile zu erreichen sowie eine exakte Endabschaltung sind die Endschalter (8, 9) ebenfalls in dem ersten Gehäuseabschnitt (1) angeordnet. Eine längliche Stößeleinheit (25) in dem ersten Gehäuseabschnitt (1) und dem zweiten Gehäuseabschnitt (2) erstreckt sich durch die Lagerplatte (3) parallel zu dem Schubrohr (15) und ist verschiebbar um die Endschalter (8, 9) zu betätigen. Ein zweiter Abschnitt der Stößeleinheit (25) in dem zweiten Gehäuseabschnitt (2) wird in Endstellungsbereichen des Schubrohrs (15) mit diesem mitverschoben. Der erste Gehäuseabschnitt (1) ist gegenüber dem zweiten Gehäuseabschnitt (2) sowie nach außen abgedichtet. Die Stößeleinheit (25) steht mit Zentriermitteln (32) in Verbindung, welche die Stößeleinheit (25) in einer mittleren Ausgangsposition zentrieren.

## Beschreibung

Die Erfindung betrifft einen Elektrolinearantrieb mit Endabschaltung nach dem Oberbegriff des Anspruchs 1.

Derartige Elektrolinearantriebe können als Stellvorrichtungen zum Verstellen beweglicher Teile mit erheblichen Kräften vielfältig eingesetzt werden, wie für Rauch- und Wärmeabzüge, Lüftungsklappen, insbesondere als Bestandteilen von RWA-Anlagen (Rauch- und Wärmeabzugsanlagen), Lüftungsflügel, Lüftungsjalousien, Lichtkuppeln und -bänder mit Lüftungsfunktion, Stellklappen für Rohr- und Kanallüftungsgeräte, Fenster und Türen.

Zum Stand der Technik gehörende Elektrolinearantriebe umfassen ein Schubrohr, das durch einen Elektromotor über Getriebemittel einschließlich einer Spindel, die durch den Elektromotor in Drehung versetzt wird und in eine mit dem Schubrohr fest verbundene Spindelmutter eingreift, verschoben wird. Da der Elektrolinearantrieb der Witterung oder in sonstiger Weise Feuchtigkeitseinflüssen ausgesetzt sein kann, sind feuchteempfindliche elektrische Komponenten in einem Gehäuse des Linearantriebs nach außen abgedichtet angeordnet. Die Abdichtung des Gehäuseinneren ist jedoch, insbesondere infolge des aus dem Gehäuse herausgeführten Schubrohrs und des von ihm und der Spindelmutter bei Betätigung in dem Gehäuse erzeugten Sogs allenfalls mit aufwendigen konstruktiven Mitteln bzw. Dichtungen zu erreichen.

Im einzelnen umfaßt ein aus der Praxis bekannter Elektrolinearantrieb mit Endabschaltung in zwei Endstellungen eines Schubrohrs der eingangs genannten Gattung ein durch eine zentrale Lagerplatte in zwei Gehäuseabschnitte unterteiltes Gehäuse. In dem ersten Gehäuseabschnitt sind ein Elektromotor und eine Lastabschaltungsplatine mit elektrischen Bauteilen zur Endabschaltung des Elektromotors angeordnet. Die Endabschaltung dient dazu, den Elektromotor abzuschalten, wenn das Schubrohr eine seiner möglichen Endstellungen erreicht hat, und um eine mechanische Überlastung des Elektrolinearantriebs und/oder der von ihr betätigten Elemente sowie eine thermische Überlastung des Elektromotors zu vermeiden, wenn das Schubrohr "auf Block" gefahren ist. Zur Abschaltung des Elektromotors, wenn das Schubrohr in eine seiner beiden Endstellungen gefahren ist, dienen zwei Endschalter, die in dem zweiten Gehäuseabschnitt auf Endschalterplatinen so angeordnet sind, daß ihre Betätigungselemente direkt durch die Spindelmutter bzw. eine auf die Spindelmutter aufgebrachte Schiebemutter betätigt werden, wenn diese in eine ihrer beiden Endstellungen verschoben wird. Die Endschalterplatinen stehen über Leitungen, die durch eine Öffnung in der Lagerplatte hindurchgeführt sind, mit der Lastabschaltungsplatine der Motorsteuerung in dem ersten Gehäuseabschnitt in elektrischer Verbindung.

Die zentrale Lagerplatte dichtet die beiden Gehäuseabschnitte nicht gegen Feuchte ab. Sie dient dazu, in ein Kugellager und eine Spindelhülse aufzunehmen, in der ein endseitiger Zapfen der Spindel drehbar gelagert ist, der mit einem Getriebeausgang des Motors in Verbindung steht. Die Spindel ist in dem zweiten Gehäuseabschnitt über die verschiebbar geführte Spindelmutter mit dem Schubrohr kraftübertragend verbunden, welches durch einen stirnseitigen Gehäusedeckel aus dem zweiten Gehäuseabschnitt herausragt. Der Gehäusedeckel nimmt einen Abstreifer auf, durch den das Schubrohr hindurchgeführt ist. - Mit dem Abstreifer in dem stirnseitigen Gehäusedeckel und durch weitere Dichtungsmaßnahmen soll das gesamte Gehäuseinnere, welches den ersten Gehäuseabschnitt und den zweiten Gehäuseabschnitt umfaßt, nach außen gegen Feuchtigkeit abgedichtet werden, was aber aus den weiter oben genannten Gründen nicht immer dauerhaft erreicht wird.

Der vorliegenden Erfindung liegt daher die Aufgabe zugrunde, die Abdichtung des Gehäuseinneren, welches elektrische Teile aufnimmt, nach außen gegen Feuchte mit unkomplizierten konstruktiven Mitteln zu verbessern.

Diese Aufgabe wird mit einem Elektrolinearantrieb gelöst, der die in Anspruch 1 angegebenen Merkmale aufweist.

Der Kern der Erfindung besteht darin, daß nicht das gesamte Gehäuse des Elektrolinearantriebs nach außen abgedichtet wird, sondern nur der erste Gehäuseabschnitt, der den Elektromotor aufnimmt, wobei dieser erste Abschnitt auch gegenüber dem zweiten Gehäuseabschnitt gegen Feuchte abgedichtet ist, nämlich im Bereich einer Lagerung der Spindel, mit der das Schubrohr betätigt wird, sowie an einer Stößeleinheit, die in Endstellungsbereichen des Schubrohrs eine begrenzte Verschiebung in den ersten Gehäuseabschnitt überträgt, in dem hier die Endschalter angeordnet sind, mit denen der Elektromotor in einer der Endstellungen des Schubrohrs selbsttätig abgeschaltet wird. Somit braucht der zweite Gehäuseabschnitt, der im wesentlichen die Spindel und das von ihr gegebenenfalls über eine Spindelmutter betätigte Schubrohr einschließt, soweit letzteres nicht ausgefahren ist, nach außen nicht dicht gegen das Eindringen von Feuchtigkeit geschützt zu sein.

Durch die erfindungsgemäße Ausbildung des Elektrolinearantriebs wird zusätzlich erreicht, daß infolge der Verlagerung der Endschalter aus dem zweiten Gehäuseabschnitt, in dem sie normalerweise zu betätigen wären, in den ersten Gehäuseabschnitt die Montage der Gesamtheit der elektrischen Komponenten des Elektrolinearantriebs vereinfacht werden kann, indem die Endschalter beispielsweise auf einer Platine einer gedruckten Schaltung in dem ersten Gehäuseabschnitt angeordnet sind, die weitere Bauteile für die Lastabschaltung bzw. Endabschaltung des Elektromotors aufnimmt, siehe Anspruch 11.

Um eine exakte Lastabschaltung bzw. Endabschaltung durch die Stößeleinheit zu erreichen, steht gemäß Anspruch 2 die Stößeleinheit mit federbelasteten Zentriermitteln in Verbindung, welche geeignet sind, die außerhalb der Endstellungsbereiche des Schubrohrs nicht mit diesem mitverschobene Stößeleinheit in einer Ausgangsposition zu zentrieren. Diese Zentrierung erfolgt somit im Hinblick darauf, daß der zweite Abschnitt der Stößeleinheit in dem zweiten Gehäuseabschnitt, in dem sich gegebenenfalls das Schubrohr und die Spindelmutter befinden, geeignet ist, nur in Endstellungsbereichen des Schubrohrs mit diesem mitverschoben zu werden. Die Stößeleinheit ist also nicht mit dem Schubrohr bzw. der Spindelmutter ständig fest gekoppelt, was die Herstellung des Linearantriebs erleichtern kann, weil damit die Stößeleinheit zur Endabschaltung um eine definierte Strecke verschoben werden kann, die unabhängig von dem gegenseitigen Abstand der Endstellungen des Schubrohrs ist.

Eine kompakte Ausbildung der federbelasteten Zentriermittel weist die Merkmale des Anspruchs 3 auf, daß sie eine Druckfeder zwischen zwei Gleitscheiben und zwei Sicherungsscheiben umfaßt, die so im Abstand zueinander an der Stößeleinheit befestigt sind, daß sie die durch die Druckfeder belasteten Gleitscheiben einschließen, daß die Gleitscheiben in der Ausgangsposition der Stößeleinheit unter der Belastung durch die Druckfeder an gehäusefesten Anschlägen anliegen, und daß jede der beiden Gleitscheiben geeignet ist, mit je einem der beiden Sicherungsscheiben zusammen mit der Stößeleinheit entgegen der Belastung durch die Druckfeder von dem benachbarten Anschlag weg verschoben zu werden. Somit gewährleisten die Zentriermittel die Zentrierung der Stößeleinheit in deren Ausgangsposition und lassen andererseits eine Verschiebung der Stößeleinheit zur Betätigung der Endschalter zu, wenn sich das Schubrohr bzw. die Spindelmutter in einer ihrer Endstellungsbereichen befindet und dementsprechend die Stößeleinheit mitnimmt.

Zur weiterhin kompakten Ausbildung und Kraftübertragung zwischen der Stößeleinheit und den federbelasteten Zentriermitteln ohne Verkantung der Stößeleinheit ist diese konzentrisch in den Zentriermitteln angeordnet.

In einer Ausführungsform des Elektrolinearantriebs wird gemäß Anspruch 5 ein erster der beiden Anschläge durch eine Vertiefung in der Lagerplatte gebildet, die eine der beiden Gleitscheiben wenigstens teilweise aufnimmt und darüber hinaus so ausgebildet sein kann, daß sie diese Gleitscheibe verschiebbar führt, während ein zweiter der beiden Anschläge in festem Abstand zu dem ersten Anschlag in dem zweiten Gehäuseabschnitt angeordnet ist.

Um Feuchtigkeitseinflüsse auf die federbelasteten Zentriermittel zu vermeiden sind in einer zweiten Ausführung die federbelasteten Zentriermittel in Ausnehmungen der Lagerplatte und einer an ihr anliegenden Gegenplatte angeordnet, wobei die Stößeleinheit durch die Lagerplatte und die Gegenplatte konzentrisch zu den federbelasteten Zentriermitteln hindurchreicht, und zwar durch eine in der Gegenplatte angeordnete Dichtung, welche die Ausnehmungen der Lagerplatte und der Gegenplatte gegenüber dem zweiten Gehäuseabschnitt abdichtet.

Wenn gemäß Anspruch 7 eine Spindelmutter in an sich bekannter Weise an einem Gehäuseinneren Ende des Schubrohrs drehfest angeordnet ist und zusammen mit dem Schubrohr verschiebbar geführt ist, ist der zweite Abschnitt der Stößeleinheit zweckmäßig so ausgebildet, daß er mit der Spindelmutter mitverschoben wird, wenn das Schubrohr durch die Spindelmutter in einen seiner beiden Endstellungsbereiche geschoben wird.

Hierzu kann die Spindelmutter eine Schiebemutter mit einem Ansatz aufweisen, der geeignet ist, den zweiten Abschnitt der Stößeleinheit in Endstellungsbereichen des Schubrohrs mit zu verschieben. Wie weiter unten ausgeführt wird, kann hierzu die Stößeleinheit Mitnehmer oder Anschläge aufweisen, von denen jeweils einer in einem der Endstellungsbereiche des Schubrohrs an dem Ansatz der Schiebemutter zur Anlage gelangt.

In einer Ausführungsform nach Anspruch 9 kann die Lagerplatte zwischen dem ersten Gehäuseabschnitt und dem zweiten Gehäuseabschnitt ein Spindellager, eine Dichtung des Spindellagers sowie eine Dichtung der Stößeleinheit aufnehmen. Diese Ausführungsform ist konstruktiv unkompliziert.

In einer alternativen Ausführungsform gemäß Anspruch 10 kann aber auch die Gegenplatte, die an der Lagerplatte anliegt, die Dichtungen der Spindel und der Stößeleinheit aufnehmen, während das Spindellager, wie bei der ersten Ausführungsform, in der Lagerplatte angeordnet ist. Die letztgenannte Ausführungsform hat den Vorteil, daß die federbelasteten Zentriermittel, wie oben erwähnt, in Ausnehmungen der Lagerplatte und der Gegenplatte gegen Feuchte geschützt sind.

In einer ersten Ausführungsform der Stößeleinheit gemäß Anspruch 12 weist diese ein in dem zweiten Gehäuseabschnitt verschiebbares Blechteil mit zwei im Abstand zueinander abgewinkelten Anschlägen auf, die geeignet sind, von der Spindelmutter in Endstellungsbereichen der Spindelmutter bzw. des Schubrohrs mitgenommen zu werden, sowie einen mit dem Blechteil in fester Verbindung stehenden Stößel, welcher gegenüber dem zweiten Gehäuseabschnitt abgedichtet in den ersten Gehäuseabschnitt hineinreicht. - Diese Stößeleinheit kann mit einfachen üblichen Werkzeugen gefertigt werden, nämlich durch Stanzen des Blechteils, Biegen der abgewinkelten Anschläge sowie Drehen des Stößels. Diese Ausführungsform eignet sich insbesondere für kleinere Stückzahlen des Elektrolinearantriebs mit Endabschaltung.

Das verschiebbare Blechteil kann gemäß Anspruch 1 3 einfach in einer gehäusefesten Nut in den zweiten Gehäuseabschnitt geführt werden.

Demgegenüber setzt eine zweite Ausführungsform der Stößeleinheit nach Anspruch 14 die Fertigung einer speziellen Profilstange voraus. Diese wird dem zweiten Gehäuseabschnitt verschiebbar montiert. In ihre Enden sind Schrauben mit seitlich überstehenden Schraubköpfen geschraubt, um von der Spindelmutter in Endstellungsbereichen der Spindelmutter bzw. des Schubrohrs mitgenommen zu werden. Die Profilstange steht mit einem Stößel in fester Verbindung, welcher durch die Lagerplatte und ggf. die an ihr anliegende Gegenplatte hindurchreicht und mit seinem ersten Abschnitt in dem ersten Gehäuseabschnitt geeignet ist, die Endschalter zu betätigen. Die Herstellung der Profilstangen setzt zwar spezielle Fertigungseinrichtungen voraus, um ein fortlaufendes Profil auszuformen. Von diesem können dann Profilstangen der gewünschten Länge einfach abgeschnitten werden, wonach sie mit stirnseitigen Schrauben zur Mitnahme durch die Spindelmutter versehen werden können. Es können durch Ablängen der Profilstange von einem längeren Profil wahlweise Elektrolinearantriebe mit Endabschaltungen bei verschiedenen Endpositionen des Schubrohrs rationell hergestellt werden.

Im einzelnen ist die Profilstange mit den Merkmalen ausgebildet, daß sie einen unteren im Querschnitt annähernd zylindrischen Teil mit einer Gewindebohrung aufweist, aus dem oben ein Fortsatz mit einem durchgängigen Gewindeloch ausgeformt ist, welches endseitig die beiden Schrauben aufnimmt, daß der Fortsatz von zwei innen aus dem zweiten Gehäuseabschnitt ausgeformten Führungsansätzen umgriffen wird, und daß unten aus dem annähernd zylindrischen Teil eine Nut ausgeformt ist, die auf einem aus dem zweiten Gehäuseabschnitt ausgeformten Steg aufliegt. Die Nut und der aus dem zweiten Gehäuseabschnitt ausgeformte Steg dienen in Verbindung mit den aus dem zweiten Gehäuseabschnitt ausgeformten Führungsansätzen zur exakten Führung der Profilstange in dem zweiten Gehäuseabschnitt.

Zweckmäßig bestehen der Stößel und die Profilstange aus Aluminium, welches gut bearbeitet werden kann und eine verhältnismäßig massearme Ausführung des Elektrolinearantriebs erlaubt.

Ausführungsbeispiele der Erfindung werden im folgenden anhand einer Zeichnung mit acht Figuren beschrieben, woraus sich weitere vorteilhafte Merkmale der Erfindung ergeben können. Es zeigen:
- Figur 1: eine erste Ausführungsform des Elektrolinearantriebs in einem geschnittenen Gehäuse als schematische Seiten-ansicht,
- Figur 2: die erste Ausführungsform des Linearantriebs gemäß Figur 1, detaillierter, in einem Längsschnitt,
- Figur 3: eine zweite Ausführungsform des Elektrolinearantriebs in einem Längsschnitt,
- Figur 4: einen Schnitt durch die zweite Ausführungsform gemäß Figur 3 in der Schnittebene D-D,
- Figur 4a: in größerer Darstellung ein Detail des Schnitts gemäß Figur 4 im Bereich von Zentriermitteln,
- Figur 5: eine Ansicht auf die Vorderseite der zweiten Ausführungsform in Richtung E,
- Figur 6: einen Querschnitt durch die zweite Ausführungsform in der Schnittebene B-B und
- Figur 7: einen Querschnitt durch die zweite Ausführungsform in der Schnittebene C-C.

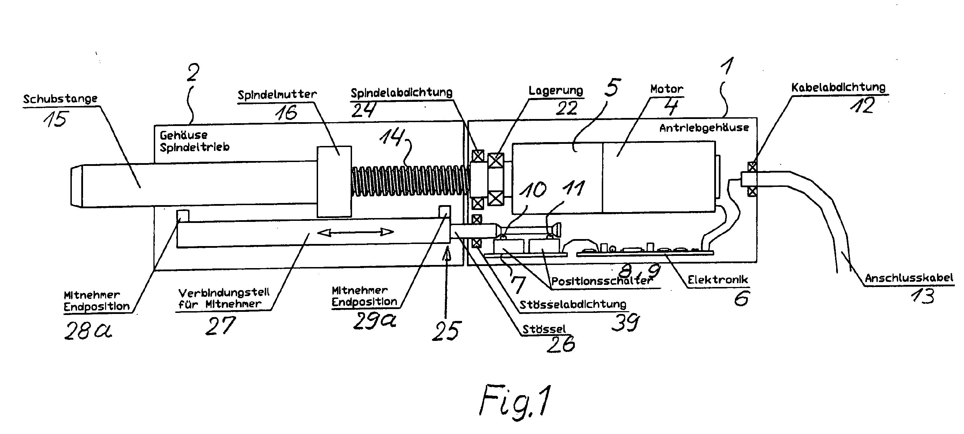

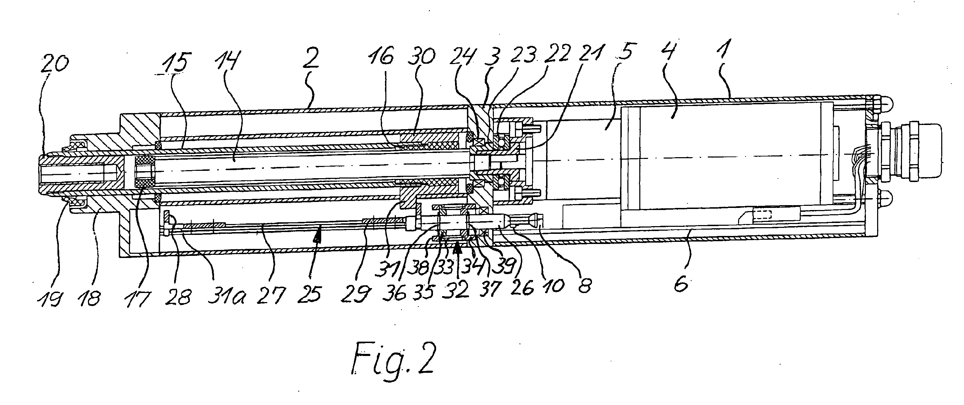

In den Figuren 1 und 2 sind zwei Gehäuseabschnitte einer ersten Ausführungsform eines Elektrolinearantriebs mit 1 und 2 bezeichnet. Die beiden Gehäuseabschnitte 1 und 2 sind gemäß der detaillierten dargestellten ersten Ausführungsform in Figur 2 durch eine Lagerplatte 3 getrennt.

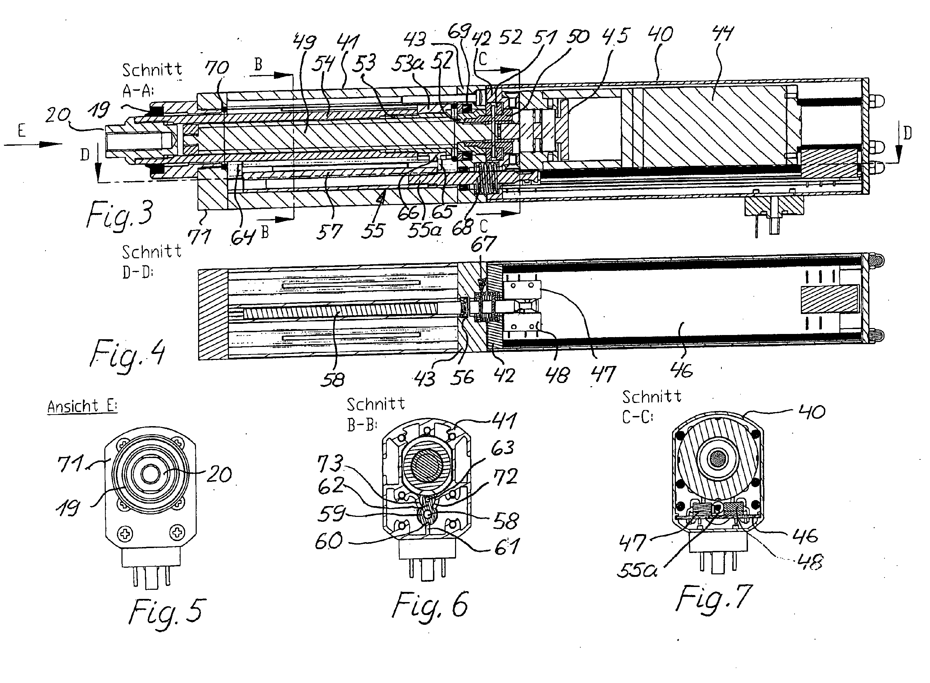

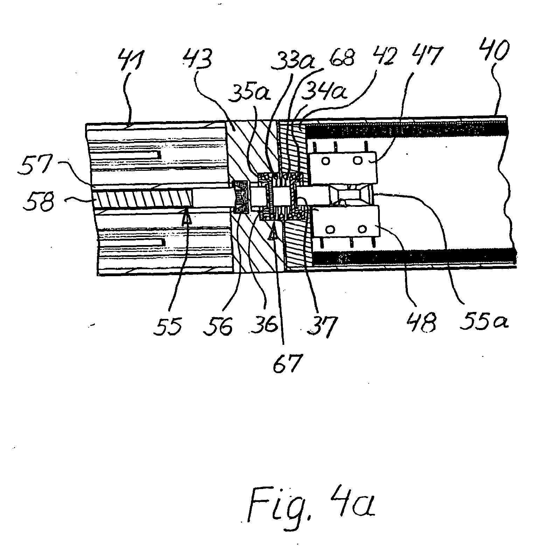

In dem ersten Gehäuseabschnitt 1 sind ein Elektromotor 4 mit einem Getriebe 5 sowie eine Lastabschaltungsplatine 6 angeordnet. Auf der Lastabschaltungsplatine 6, siehe Figuren 2 und 3, bzw. auf einer gesonderten Platine 7 neben der Lastabschaltungsplatine 6 gemäß Figur 1 sind zwei Endschalter 8, 9 angeordnet, die Betätigungselemente 10, 11 aufweisen. Die Endschalter 8, 9 befinden sich in dem ersten Gehäuseabschnitt 1.

Der erste Gehäuseabschnitt 1 ist nach außen gegenüber Feuchte abgedichtet, insbesondere mit einer Kabelabdichtung 1 2, durch die ein Anschlußkabel 13 in den ersten Gehäuseabschnitt eingeführt wird.

Abgedichtet ist der erste Gehäuseabschnitt 1 auch gegenüber dem zweiten Gehäuseabschnitt 2, der im wesentlichen eine Spindel 14 und ein Schubrohr 15 einschließt, an dessen innerem Ende eine Spindelmutter 1 6 sitzt, in die die Spindel eingreift. Ein äußeres Ende der Spindel ist in dem Schubrohr mittels eines Zentrierrings 17 gelagert, siehe Figur 2. Ein äußeres Ende des Schubrohrs ist durch einen stirnseitigen Gehäusedeckel 18 nach außen geführt und durchdringt hierzu einen Abstreifer 19 in dem Deckel. Ein Rohrstopfen 20 verschließt das Schubrohr 1 5 an seinem äußeren Ende und dient zur Verbindung des Schubrohrs mit einem durch dieses zu verstellenden Teil.

Ein inneres Ende der Spindel 14 ist als Zapfen ausgebildet und wird von einem Spindelbolzen 21 aufgenommen, der mittels eines Kugellagers 22 in einer Spindelhülse 23 gelagert ist, die mit einer Dichtung 24 abgedichtet in der Lagerplatte 3 sitzt. In dem Spindelbolzen 21 ist das innere Ende der Spindel mit einem nicht bezeichneten Ausgang des Getriebes 5 zur Übertragung eines Drehmoments verbunden.

Zur Betätigung der beiden Endschalter 8 und 9 in dem ersten Gehäuseabschnitt 1 dient eine längliche Stößeleinheit, die allgemein mit 25 bezeichnet ist. Sie besteht im wesentlichen aus einem Stößel 26 mit einem mit diesem in dem zweiten Gehäuseabschnitt 2 fest verbundenen verschiebbaren streifenförmigen Blechteil 27. Die längliche Stößeleinheit 25 erstreckt sich somit im wesentlichen parallel zu dem Schubrohr 1 5 in dem zweiten Gehäuseabschnitt 2 sowie durch die Lagerplatte 3 hindurch in dem ersten Gehäuseabschnitt 1, in dem eine Kontur an dem Stößelende zur Betätigung der Betätigungselemente 10, 11 der Endschalter 8, 9 ausgeformt ist. Das mit dem Stößel 26 verbundene Blechteil 27 weist in dem zweiten Gehäuseabschnitt abgewinkelte Anschläge 28, 29 auf, die in Endstellungsbereichen des Schubrohrs 15 bzw. der mit ihm verbundenen Spindelmutter 16 geeignet sind, von der Spindelmutter 16 betätigt zu werden, siehe Figur 2. Hierzu sitzt auf der Spindelmutter 16 eine Gleitmutter 30 mit einem Ansatz 31. - In der vereinfachten ersten Ausführungsform gemäß Figur 1 wirkt die Spindelmutter 16 direkt mit Mitnehmern 28a, 29a zusammen, welche den abgewinkelten Anschlägen 28, 29 in Figur 2 entsprechen.

Aus Figur 2 ist ersichtlich, daß die abgewinkelten Anschläge 28, 29 unten in eine Nut 31 hineinreichen, in der sie parallel zur Spindel bzw. zum Schubrohr verschiebbar sind. Die Spindelmutter 16 und die auf ihr sitzende Gleitmutter 30 sind ebenfalls in dieser Richtung verschiebbar.

Die Stößeleinheit 25 ist zu ihrer Zentrierung in einer mittleren Ausgangsposition, wenn die abgewinkelten Anschläge 28, 29 bzw. Mitnehmer 28a, 29a nicht belastet bzw. verschoben sind, mit federbelasteten Zentriermitteln, die allgemein mit 32 bezeichnet sind, siehe Figur 2, in einer mittleren Ausgangsstellung zentriert, die in Figur 1 dargestellt ist. In Figur 2 befindet sich die Stößeleinheit 25 nahe ihrer inneren bzw. rechten Endstellung. Die federbelasteten Zentriermittel 32 umfassen eine Druckfeder 33, die zwei auf dem Stößel 26 verschiebbare Gleitscheiben 34, 35 auseinanderdrückt, und zwar bis zur Anlage an im gegenseitigen Abstand zueinander angeordneten Sicherungsscheiben 36, 37, die fest in nicht bezeichneten Nuten des Stößels 26 sitzen.

Zu den abgewinkelten Anschlägen 28, 29 wird bemerkt, daß diese nicht als separate Teile hergestellt und auf dem Blechteil 27 befestigt sein müssen, sondern auch direkt aus dem Blechteil einstückig ausgeformt sein können.

In der in Figur 2 dargestellten Position der Stößeleinheit liegt in einer nicht bezeichneten Ausnehmung der Lagerplatte 3 verschiebbar geführte rechte Gleitscheibe 34 an einer Stirnseite der Ausnehmung an, an der die Ausnehmung einen Anschlag bildet. Im festen Abstand zu dem Anschlag ist in dem zweiten Gehäuseabschnitt 2 ein weiterer Anschlag angeordnet, der mit 38 bezeichnet ist und an dem die linke Gleitscheibe 35 anliegt. Der Stößel 26 ist durch die Gleitscheiben 34, 35, die Sicherungsscheiben 36, 37 und die Druckfeder 33 konzentrisch hindurchgeführt. Zur Abdichtung des ersten Gehäuseabschnitts 1 gegenüber dem zweiten Gehäuseabschnitt 2 im Bereich dieser Durchführung dient eine Dichtung 39 in der Lagerplatte 3.

In den in Figuren 1 und 2 dargestellten Positionen der Stößeleinheit 25 wird keiner der beiden Endschalter 8, 9 durch sein Betätigungselement 10 bzw. 11 betätigt, da sich nur ein nicht bezeichneter verjüngter Abschnitt des Stößels 26 bei diesen Betätigungselementen befindet. Diese Einstellung hält an, bis beispielsweise der abgewinkelte Anschlag 28 bei einer Verschiebung des Schubrohrs 15 nach außen in dessen Endstellungsbereich durch den Ansatz 31 der Gleitmutter mitgenommen wird. Dementsprechend drückt die Sicherungsscheibe 37 gegen die Gleitscheibe 34 und diese aus der Ausnehmung der Lagerplatte 3 heraus und betätigt mit dem konischen Ende in dem ersten Abschnitt des Stößels 26 das Betätigungselement 11 des Endschalters 8. Der Motor 4, der das Schubrohr 15 mittels der Spindel 14 nach außen schiebt, wird dadurch über die Elektronik der Lastabschaltungsplatine 6, die auch als Endabschaltplatine bezeichnet werden kann, abgeschaltet. Der Motor kann dann in entgegengesetzter Drehrichtung extern wieder eingeschaltet werden, womit das Schubrohr eingezogen wird und der Stößel 26 unter der Wirkung der Druckfeder 33 wieder in seine mittlere Ausgangsstellung zurückgestellt wird. - Wenn hingegen das Schubrohr 15 mit der Spindel 14 aus der in Figur 2 gezeigten Stellung weiter nach innen bzw. rechts in seinen anderen Endbereich fährt, nimmt der Ansatz 31 der Gleitmutter 30 den abgewinkelten Anschlag 29 nach rechts mit, wodurch die Sicherungsscheibe 36 die Gleitscheibe 35 entgegen der Kraft der Druckfeder 33 nach rechts schiebt und der Stößel 26 mit seinem inneren konusförmigen Teil den Endschalter 7 betätigt und den Motor 4 abschaltet. Bei einem von außen befohlenen Zurückfahren des Schubrohrs 15 nach links wird, wenn das Schubrohr 15 seinen inneren Endstellungsbereich verläßt, das federbelastete Zentriermittel 33 in seine Ausgangslage zurückgestellt, in der die Gleitscheibe 35 durch die Druckfeder 33 an den weiteren Anschlag 38 angedrückt wird.

Die zweite Ausführungsform des Elektrolinearantriebs gemäß den Figuren 3 bis 7 unterscheidet sich von der ersten Ausführungsform, insbesondere gemäß Figur 2, einmal dadurch, daß zwischen einem ersten Gehäuseabschnitt 40 und einem zweiten Gehäuseabschnitt 41 außer einer Lagerplatte 42 eine an der Lagerplatte auf der Seite des zweiten Gehäuseabschnitts 41 liegende Gegenplatte 43 angeordnet sind.

In dem ersten Gehäuseabschnitt 40 sind wiederum der Elektromotor 44 mit einem Getriebe 45 sowie eine Platine 46 angeordnet, welche eine Lastabschaltungselektronik und Endschalter 47, 48 trägt.

Der zweite Gehäuseabschnitt 41 beinhaltet wiederum den überwiegenden Teil einer Spindel 49, deren nicht bezeichneter Zapfen mit einem Ausgang des Getriebes 45 im Drehmoment übertragener Verbindung steht und über einen Spindelbolzen 50 in einem Kugellager 51 und einer Spindelhülse 52 gelagert ist, die in der Gegenplatte angeordnet ist.

Die Spindel 49 greift in eine Spindelmutter 53 ein, die an einem inneren Ende eines Schubrohrs 54 angebracht ist. Auf der Spindelmutter 53 sitzt eine Gleitmutter 53a, die geeignet ist, mit einer allgemein mit 55 bezeichneten Stößeleinheit zusammenzuwirken.

Hinsichtlich der Stößeleinheit 55 unterscheidet sich die zweite Ausführungsform von der ersten Ausführungsform: Die Stößeleinheit 55 umfaßt zwar wiederum einen Stößel 55a, von dem ein Ende, welches sich in dem ersten Gehäuseabschnitt 40 befindet, so gestaltet ist, daß es nicht bezeichnete Betätigungselemente der Endschalter 47, 48 betätigen kann. Dieser Stößel reicht durch die Lagerplatte 42 und durch die Gegenplatte 43 hindurch in den zweiten Gehäuseabschnitt 41, und zwar durch eine Dichtung 56, die hier in der Gegenplatte 43 angeordnet ist. In dem zweiten Gehäuseabschnitt 41 ist ein Ende des Stößels 55a in eine in dem zweiten Gehäuseabschnitt 41 verschiebbare Profilstange 57 eingedreht, und zwar in eine Gewindebohrung 58, siehe Figur 4.

Der Querschnitt der Profilstange 57, die zweckmäßig aus Aluminium besteht, ergibt sich aus Figur 6: Darin ist zu erkennen, daß die Profilstange 57 einen unteren, im Querschnitt annähernd zylindrischen Teil 59 aufweist, durch den die Gewindebohrung 58 für die Stößel zentral hindurchgeht. An seiner untersten Stelle weist der zylindrische Teil 59 eine Nut 60 auf, die auf einem aus dem zweiten Gehäuseabschnitt 41 innen ausgeformten Steg 61 aufliegt. Nach oben erstreckt sich von dem zylindrischen Teil 59 ein schmalerer Fortsatz 62, der von Führungsansätzen 72, 73 umgriffen wird, die aus dem zweiten Gehäuseabschnitt 41 ausgeformt sind. In dem Fortsatz 62 ist ein durchgängiges Gewindeloch 63 vorgesehen, welches an jedem Ende der Profilstange 57 eine eingedrehte Schraube 64 bzw. 65 mit seitlich überstehendem Schraubkopf aufnimmt. Die Schraubköpfe sind so angeordnet, daß sie von der Spindelmutter 53 bzw. der auf der Spindelmutter sitzenden Gleitmutter 53a in Endstellungsbereichen des Schubrohrs 54 bzw. der Spindelmutter 53 mitgenommen werden, wozu die Gleitmutter nicht bezeichnete Vertiefungen beidseitig eines Ansatzes 66 aufweist.

Mit dem Stößel 55a der Stößeleinheit 55 stehen wiederum federbelastete Zentriermittel 67 in kraftschlüssiger Verbindung, die im wesentlichen wie die Zentriermittel 32 gemäß Figur 2 aufgebaut sind, weshalb übereinstimmende Bestandteile mit gleichen Bezugszeichen versehen sind. Die Zentriermittel 67 sind in Figur 4a verdeutlicht. Hieraus ist ersichtlich, daß ein Anschlag einer linken Gleitscheibe 35a durch eine Ausnehmung in der Gegenplatte 43 gebildet ist. Die Zentriermittel 67 sind in einer Kammer 68 angeordnet, die einerseits aus der Lagerplatte 42 und andererseits aus der Gegenplatte 44 ausgeformt ist. Die Kammer 68 ist gegenüber dem zweiten Gehäuseabschnitt 41 durch die Dichtung 56 in der Gegenplatte 43 abgedichtet. Die Gegenplatte 43 nimmt weiterhin eine Dichtung 69 der Spindelhülse 52 auf. Durch diese beiden Dichtungen ist der erste Gehäuseabschnitt 40 gegen das Eindringen von Feuchte geschützt, auch wenn der Abstreifer 19 und eine weitere Dichtung 70 an einem Gehäusedeckel 71, durch den ein äußerer Endabschnitt des Schubrohrs 54 mit dem Rohrstopfen 20 geführt ist, siehe Figur 3, nur eine unvollständige Abdichtung bewirken sollten. ― Dank der mit den Zentriermitteln 67 einschließlich der Druckfeder 33a in ihrer mittleren Ausgangsposition zentrierten Stößeleinheit 55 erfolgt eine zuverlässige beidseitige Endabschaltung in Endstellungen des Schubrohrs, die durch die Länge und Anordnung der Profilstange und der in sie eingedrehten Schrauben flexibel und genau bestimmt werden können, ohne die Einbaulage der Endschalter zu verändern.

### Bezugszahlenliste

- 1: 1. Gehäuseabschnitt
- 2: 2. Gehäuseabschnitt
- 3: Lagerplatte
- 4: Elektromotor
- 5: Getriebe
- 6: Lastabschaltungsplatine
- 7: Platine
- 8: Endschalter
- 9: Endschalter
- 10: Betätigungselement
- 11: Betätigungselement
- 12: Kabelabdichtung
- 13: Anschlußkabel
- 14: Spindel
- 15: Schubrohr
- 16: Spindelmutter
- 17: Zentrierring
- 18: stirnseitiger Gehäusedeckel
- 19: Abstreifer
- 20: Rohrstopfen
- 21: Spindelbolzen
- 22: Kugellager
- 23: Spindelhülse
- 24: Dichtung
- 25: Stößeleinheit
- 26: Stößel
- 27: Blechteil
- 28: abgewinkelter Anschlag
- 28a: Mitnehmer
- 29: abgewinkelter Anschlag
- 29a: Mitnehmer
- 30: Gleitmutter
- 31: Ansatz
- 31 a: Nut
- 32: federbelastete Zentriermittel
- 33: Druckfeder
- 33a: Druckfeder
- 34: Gleitscheibe
- 34a: Gleitscheibe
- 35: Gleitscheibe
- 35a: Gleitscheibe

- 36: Sicherungsscheibe
- 37: Sicherungsscheibe
- 38: weiterer Anschlag
- 39: Dichtung
- 40: 1. Gehäuseabschnitt
- 41: 2. Gehäuseabschnitt
- 42: Lagerplatte
- 43: Gegenplatte
- 44: Elektromotor
- 45: Getriebe
- 46: Platine
- 47: Endschalter
- 48: Endschalter
- 49: Spindel
- 50: Spindelbolzen
- 51: Kugellager
- 52: Spindelhülse
- 53: Spindelmutter
- 53a: Gleitmutter
- 54: Schubrohr
- 55: Stößeleinheit
- 55a: Stößel
- 56: Dichtung
- 57: Profilstange
- 58: Gewindebohrung für Stößel
- 59: Zylindrischer Teil
- 60: Nut
- 61: Steg
- 62: Fortsatz
- 63: Gewindeloch
- 64: Schraube
- 65: Schraube
- 66: Ansatz
- 67: Zentriermittel
- 68: Kammer
- 69: Dichtung für Spindelhülse
- 70: Dichtung für Gehäusedeckel
- 71: Gehäusedeckel
- 72: Führungsansatz
- 73: Führungsansatz

## Patentansprüche

1. Elektrolinearantrieb mit Endabschaltung in zwei Endstellungen eines Schubrohrs (15, 54), das durch einen Elektromotor (4, 44) über Getriebemittel (5, 45) einschließlich einer Spindel (14, 49) verschiebbar ist, mit Endschaltern (8, 9; 47, 48), die in Abhängigkeit von der Position des Schubrohrs betätigbar sind, sowie mit einem Gehäuse, welches einen ersten Gehäuseabschnitt (1, 40), einen zweiten Gehäuseabschnitt (2, 41) und eine zwischen beiden Gehäuseabschnitten angeordnete Lagerplatte (3, 42) aufweist, wobei der Elektromotor (4, 44) in dem ersten Gehäuseabschnitt (1, 40) angeordnet ist, wobei der zweite Gehäuseabschnitt (2, 41) das in ihm verschiebbare Schubrohr (15, 54) und die Spindel (14, 49) aufnimmt, die in der Lagerplatte (3, 42) drehbar gelagert ist, und wobei der Elektromotor (4, 44) und die Endschalter (8, 9; 47, 48) in dem Gehäuse nach außen gegen Feuchte abgedichtet untergebracht sind,
**dadurch gekennzeichnet,**
**daß** die Endschalter (8, 9; 47, 48) in dem ersten Gehäuseabschnitt (1, 40) angeordnet sind,
**daß** eine längliche Stößeleinheit (25, 55) vorgesehen ist, die in dem ersten Gehäuseabschnitt (1, 40) und dem zweiten Gehäuseabschnitt (2, 41) sich durch die Lagerplatte (3, 42) erstreckend im wesentlichen parallel zu dem Schubrohr (15, 54) angeordnet ist und verschiebbar ist,
**daß** ein erster Abschnitt der Stößeleinheit (25, 55) in dem ersten Gehäuseabschnitt (1, 40) geeignet ist, die Endschalter (8, 9; 47, 48) zu betätigen,
**daß** ein zweiter Abschnitt der Stößeleinheit (25, 55) in dem zweiten Gehäuseabschnitt (2, 41) geeignet ist, in Endstellungsbereichen des Schubrohrs (15, 54) mit diesem mitverschoben zu werden, und
**daß** der erste Gehäuseabschnitt (1, 40) gegenüber dem zweiten Gehäuseabschnitt (2, 41) sowie nach außen abgedichtet ist.

2. Elektrolinearantrieb nach Anspruch 1,
**dadurch gekennzeichnet,**
**daß** die Stößeleinheit (25, 55) mit federbelasteten Zentriermitteln (32, 67) in kraftschlüssiger Verbindung steht, welche geeignet sind, die zwischen den Endstellungsbereichen des Schubrohrs (15, 54) nicht mit diesem mitverschobene Stößeleinheit (25, 55) in einer mittleren Ausgangsposition zu zentrieren.

3. Elektrolinearantrieb nach den Ansprüchen 1 und 2,
**dadurch gekennzeichnet,**
**daß** die federbelasteten Zentriermittel (32, 67) eine Druckfeder (33, 33a) zwischen zwei Gleitscheiben (34, 35; 34a, 35a) und zwei Sicherungsscheiben (36, 37) umfaßt, die so im Abstand zueinander an der Stößeleinheit (25, 55) befestigt sind, daß sie die durch die Druckfeder (33, 33a) belasteten Gleitscheiben (34, 35; 34a, 35a) einschließen, daß die Gleitscheiben (34, 35; 34a, 35a) in der mittleren Ausgangsposition der Stößeleinheit (25, 55) unter der Belastung durch die Druckfeder (33, 33a) an gehäusefesten Anschlägen (38) anliegen und
**daß** jede der beiden Gleitscheiben (34, 35; 34a, 35a) geeignet ist, mit je einem der beiden Sicherungsscheiben (36, 37) entgegen der Belastung durch die Druckfeder (33, 33a) mit der Stößeleinheit (25, 55) von einem der Anschläge (38) weg verschoben zu werden.

4. Elektrolinearantrieb nach wenigstens einem der Ansprüche 1 bis 3,
**dadurch gekennzeichnet,**
**daß** die Stößeleinheit (25, 55) konzentrisch in den federbelasteten Zentriermitteln (32, 67) angeordnet ist.

5. Elektrolinearantrieb nach Anspruch 3 oder 4,
**dadurch gekennzeichnet,**
**daß** ein erster der beiden Anschläge durch eine Vertiefung in der Lagerplatte (3, 42) gebildet ist, die eine der beiden Gleitscheiben (34, 35; 34a, 35a) wenigstens teilweise aufnimmt, und daß ein zweiter der beiden Anschläge (38) in festem Abstand zu dem ersten Anschlag in dem zweiten Gehäuseabschnitt (2, 41) angeordnet ist.

6. Elektrolinearantrieb nach wenigstens einem der vorangehenden Ansprüche,
**dadurch gekennzeichnet,**
**daß** die federbelasteten Zentriermittel (67) in Ausnehmungen der Lagerplatte (42) und einer an ihr anliegenden Gegenplatte (43) angeordnet sind, die an den zweiten Gehäuseabschnitt (41) angrenzt, daß die Stößeleinheit (55) durch die Lagerplatte (42) und die Gegenplatte (43) konzentrisch zu den federbelasteten Zentriermitteln (67) hindurchreicht und daß die Stößeleinheit (55) in der Gegenplatte (43) durch eine Dichtung (56) hindurchreicht, welche die Ausnehmungen der Lagerplatte (42) und der Gegenplatte (43) gegenüber dem zweiten Gehäuseabschnitt (41) abdichtet.

7. Elektrolinearantrieb nach wenigstens einem der vorangehenden Ansprüche,
**dadurch gekennzeichnet,**
**daß** eine Spindelmutter (16, 53) an einem Gehäuseinneren Ende des Schubrohrs (15, 54) drehfest angeordnet ist und zusammen mit dem Schubrohr (15, 54) verschiebbar geführt ist, daß die Spindel (14, 49) in die Spindelmutter (16, 53) eingreift und daß der zweite Abschnitt der Stößeleinheit (25, 55) geeignet ist, mit der Spindelmutter (16, 53) mitverschoben zu werden.

8. Elektrolinearantrieb nach Anspruch 7,
**dadurch gekennzeichnet,**
**daß** die Spindelmutter (16, 53) einen Ansatz (31, 66) aufweist, der geeignet ist, den zweiten Abschnitt der Stößeleinheit (25, 55) mit zu verschieben.

9. Elektrolinearantrieb nach wenigstens einem der vorangehenden Ansprüche,
**dadurch gekennzeichnet,**
**daß** die Lagerplatte (3, 42) eine Spindelhülse (23, 52), ein Lager (22, 51) der Spindel (14, 49), eine Dichtung (24, 69) der Spindelhülse (23, 52) sowie eine Dichtung (39, 56) der Stößeleinheit (25, 55) aufnimmt.

10. Elektrolinearantrieb nach den Ansprüchen 1 bis 6 und ggf. einem der Ansprüche 7 und 8,
**dadurch gekennzeichnet,**
**daß** die Gegenplatte (43) die Dichtungen (56, 69) der Stößeleinheit und der Spindelhülse aufnimmt.

11. Elektrolinearantrieb nach wenigstens einem der vorangehenden Ansprüche,
**dadurch gekennzeichnet,**
**daß** in dem ersten Gehäuseabschnitt (1, 40) eine Platine (7, 46), die eine elektronische Baugruppe der Lastabschaltung bzw. Endabschaltung sowie die mit ihr in elektrischer Verbindung stehenden Endschalter (8, 9; 47, 48) trägt, untergebracht ist.

12. Elektrolinearantrieb nach wenigstens einem der vorangehenden Ansprüche,
**dadurch gekennzeichnet,**
**daß** die Stößeleinheit (25) eine in dem zweiten Gehäuseabschnitt (2) verschiebbares Blechteil (27) mit zwei im Abstand zueinander abgewinkelten Anschlägen (28), die geeignet sind, von der Spindelmutter (16) in Endstellungsbereichen des Schubrohrs (15) bzw. der Spindelmutter mitgenommen zu werden, sowie einen mit dem Blechteil (27) in fester Verbindung stehenden Stößel (26) aufweist, welcher feuchtigkeitsdicht in den ersten Gehäuseabschnitt (1) hineinreicht.

13. Elektrolinearantrieb nach den Ansprüchen 1 und 12 und ggf. wenigstens einem der Ansprüche 2 bis 11,
**dadurch gekennzeichnet,**
**daß** das verschiebbare Blechteil (27) der Stößeleinheit (25) in einer Nut (31 a) geführt ist.

14. Elektrolinearantrieb nach wenigstens einem der Ansprüche 1 bis 11,
**dadurch gekennzeichnet,**
**daß** die Stößeleinheit (55) eine in dem zweiten Gehäuseabschnitt (41) verschiebbar geführte Profilstange (57) umfaßt, an deren Enden Schrauben (64, 65) mit seitlich überstehenden Schraubköpfen geschraubt sind, die geeignet sind, von der Spindelmutter (53) in Endstellungsbereichen der Spindelmutter (53) bzw. des Schubrohrs (54) mitgenommen zu werden, und daß die Profilstange (57) mit einem Stößel (55a) in fester Verbindung steht, welcher durch die Lagerplatte (42) und ggf. die an ihr anliegende Gegenplatte (43), die an den zweiten Gehäuseabschnitt (41) angrenzt, abgedichtet hindurchreicht, und mit seinem ersten Abschnitt in dem ersten Gehäuseabschnitt (40) geeignet ist, die Endschalter (47, 48) zu betätigen.

15. Elektrolinearantrieb nach Anspruch 14,
**dadurch gekennzeichnet,**
**daß** die Profilstange (57) mit einem unteren im Querschnitt annähernd zylindrischen Teil (59) mit einer Gewindebohrung (58) ausgebildet ist, in welches an einem Ende der Stößel (55a) eingeschraubt ist und aus dem oben ein Fortsatz (62) mit einem durchgängigen Gewindeloch (63) ausgeformt ist, welches endseitig die beiden Schrauben (64, 65) aufnimmt, daß der Fortsatz (62) von zwei innen aus dem zweiten Gehäuseabschnitt (41) ausgeformten Führungsansätzen (72, 73) umgriffen wird, und daß unten aus dem annähernd zylindrischen Teil (59) eine Nut (60) ausgeformt ist, die auf einem aus dem zweiten Gehäuseabschnitt ausgeformten Steg (61) aufliegt.

16. Elektrolinearantrieb nach Anspruch 15,
**dadurch gekennzeichnet,**
**daß** der Stößel (55a) und die Profilstange (57) aus Aluminium bestehen.
